# EUROPEAN PATENT APPLICATION

(11) **EP 4 779 181 A1**
(43) Date of publication of application: **22.07.2026**
(21) Application number: 24865408.9
(22) Date of filing: 09.09.2024
(51) Int. Cl.: F16J 15/34

(54) **SLIDING COMPONENT**

(30) Priority: 11.09.2023 JP 2023146614
(71) Applicant: Eagle Industry Co., Ltd., Minato-ku Tokyo 105-8587 (JP)
(72) Inventor: KAJIHARA Keita, Tokyo 105-8587 (JP); KATORI Hikaru, Tokyo 105-8587 (JP); NAGASE Yohei, Tokyo 105-8587 (JP); MURAKAMI Yasuhiro, Tokyo 105-8587 (JP)
(74) Representative: Patentquadrat Patentanwaltsgesellschaft mbH
(86) International application number: PCT/JP2024/032250
(87) International publication number: WO 2025/057908

(57) **Abstract**

There is provided a sliding component that can prevent a sliding ring from falling off. A sliding component U that is disposed at a relative rotation position between a housing 4 and a shaft 1 inserted into the housing 4 includes a sliding ring 10, a sleeve 11 that includes a support piece 11a for supporting the sliding ring 10 in a radial direction, a biasing member 13 that biases the sliding ring 10 to one side in an axial direction, and holding member 15 that is fixed to the sleeve 11 and holds the biasing member 13 in a state in which the biasing member 13 is contracted in the axial direction.

## Description

### {TECHNICAL FIELD}

The present invention relates to a sliding component, for example, a sliding component used for a shaft seal and a bearing.

### {BACKGROUND ART}

For example, a mechanical seal that includes a pair of annular sliding rings rotating relative to each other and having sliding surfaces sliding against each other is known as a sliding component for preventing the leakage of a fluid to be sealed around a rotating shaft in rotating machinery. In such a mechanical seal, it is common practice to improve assembly efficiency by unitizing various components constituting the sliding component.

For example, a seal ring unit of a mechanical seal disclosed in Patent Citation 1 includes a cartridge that is fixed to a housing and has a substantially inverted C-shaped cross-section, a seal ring that is held by a support portion of the cartridge, a bellows that seals a gap between the seal ring and the cartridge, and a spring that is disposed between the cartridge and the seal ring and biases the seal ring in the axial direction. It is possible to efficiently assemble the mechanical seal by mounting these components on the housing in a state in which these components are assembled.

### {CITATION LIST}

### {Patent Literature}

Patent Citation 1: JP 3210688Y (Page 7, FIG. 1)

### {SUMMARY OF INVENTION}

### {Technical Problem}

In Patent Citation 1, one end of the bellows is pressed against and fixed to the seal ring from a radially outer side by an annular case and the other end of the bellows is pressed against and fixed to the support portion of the cartridge from the radially outer side by an annular driving band. Since a biasing force applied in the axial direction constantly acts on the seal ring from the spring as described above, the spring extends in the axial direction due to vibration generated during the transport or assembly of the seal ring unit and the seal ring is pushed in the axial direction. For this reason, there is a concern that the seal ring may fall off from the support portion of the cartridge.

The present invention has been made in view of such a problem, and an object of the present invention is to provide a sliding component that can prevent a sliding ring from falling off.

### {Solution to Problem}

In order to solve the foregoing problem, a sliding component according to the present invention is a sliding component that is disposed at a relative rotation position between a housing and a shaft inserted into the housing, including: a sliding ring that is provided on a rotating side or a fixed side; a sleeve that includes a support portion extending in an axial direction and a receiving portion extending in a radial direction; an elastic member that is disposed between the support portion and the sliding ring; a biasing member that is disposed between the sliding ring and the receiving portion and biases the sliding ring to one of a first side and a second side which are opposed to each other in the axial direction; and a holding member that is fixed to the sleeve and holds the biasing member in a state in which the biasing member is contracted in the axial direction. According to the aforesaid feature of the present invention, since the holding member prevents the biasing member from excessively extending in the axial direction, the fall off of the sliding ring from the support piece of the sleeve, which may occur due to the movement of the biasing member in the axial direction acting on the sliding ring during the transport or mounting of the sliding component, is prevented.

It may be preferable that the sleeve includes an opposing portion that faces the support portion in the radial direction, and the holding member is press-fitted into the opposing portion. According to this preferable configuration, it is easy to install the holding member.

It may be preferable that the holding member has an annular shape. According to this preferable configuration, the opposing portion of the sleeve is equally reinforced in a circumferential direction.

It may be preferable that the holding member is formed of a sheet-like body which is formed in a C-shape in a cross section and which is configured to be deformable in the radial direction. According to this preferable configuration, since the large outer peripheral surface or the large inner peripheral surface of the holding member can be ensured in the axial direction, the strength of the opposing portion of the sleeve can be increased and the holding member can be accurately mounted.

It may be preferable that one of the holding member and the sliding ring is provided with a protruding portion that extends in the axial direction, and remaining one of the holding member and the sliding ring is provided with a recessed portion that is fitted to the protruding portion to be movable relative to the protruding portion in the axial direction. According to this preferable configuration, since the recessed portion and the protruding portion are fitted to each other, the relative movement of the holding member and the sliding ring in the axial direction is allowed and the relative movement thereof in the circumferential direction is regulated. Accordingly, the sliding ring can be prevented from rotating together with the other sliding ring while receiving a biasing force from the biasing member.

It may be preferable that the biasing member is disposed to be offset from the sliding ring in the radial direction, and the sliding component further comprises an annular biasing-member-receiving member having a first portion overlapping with the holding member in the axial direction and a second portion overlapping with the sliding ring in the axial direction, the first portion and the second portion forming a stepped shape in the axial direction. According to this preferable configuration, since the biasing member and the sliding ring can be disposed to partially overlap with each other by the biasing-member-receiving member having the stepped shape, the dimension of the sliding component in the axial direction can be reduced.

It may be preferable that the elastic member includes a bulging portion that bulges out toward remaining one of the first side and the second side in the axial direction as compared to the sliding ring, and the biasing-member-receiving member is brought into contact with the bulging portion. According to this preferable that, since the inclination of the biasing-member-receiving member is absorbed by the elastic member, the posture of the sliding ring can be stabilized.

It may be preferable that the sliding ring includes an annular groove that is open to the remaining one of the first side and the second side in the axial direction and open toward the support portion in the radial direction, and the elastic member is disposed in the annular groove. According to this preferable configuration, since the elastic member is in contact with an axial end face and a radial peripheral surface of the annular groove, the support portion, and the biasing-member-receiving member, the twist or slip of the elastic member can be prevented by static friction.

### {BRIEF DESCRIPTION OF DRAWINGS}

FIG. 1 is a longitudinal sectional view illustrating an example of a mechanical seal as a sliding component according to a first embodiment of the present invention.
FIG. 2 is a longitudinal sectional view illustrating a stationary seal ring-side unit in the first embodiment.
FIG. 3 is a diagram illustrating an adapter as viewed in an axial direction in the first embodiment.
FIG. 4 is a diagram illustrating a stationary seal ring as viewed in the axial direction in the first embodiment.
FIG. 5 is a schematic diagram illustrating a state in which the adapter and the stationary seal ring are combined with each other in the first embodiment.
FIG. 6 is a longitudinal sectional view illustrating a stationary seal ring-side unit as a sliding component according to a second embodiment of the present invention.
FIG. 7 is a longitudinal sectional view illustrating a stationary seal ring-side unit as a sliding component according to a third embodiment of the present invention.

### {DESCRIPTION OF EMBODIMENTS}

Modes for implementing a sliding component according to the present invention will be described on the basis of embodiments.

### {First embodiment}

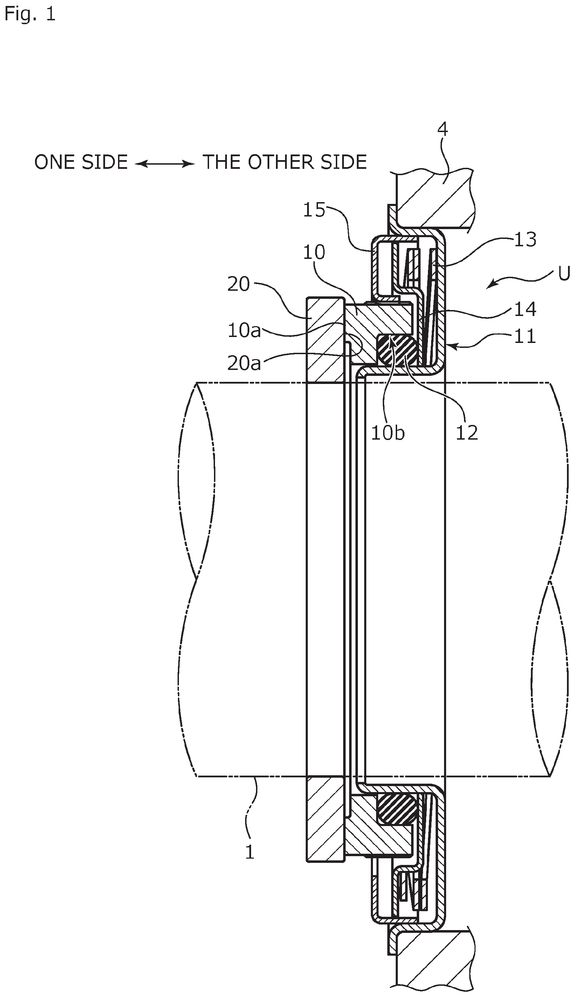

A sliding component according to a first embodiment of the present invention will be described with reference to FIGS. 1 to 5. In this embodiment, a stationary seal ring-side unit of a mechanical seal will be described as an example of the sliding component. Further, a left side in FIG. 1 will be described as one side in an axial direction, and a right side in FIG. 1 will be described as the other side in the axial direction. The one side is one of a first side and a second side which are opposed to each other in the axial direction. The other side is remaining one of the first side and the second side.

A mechanical seal illustrated in FIG. 1, for example, is to seal a gap around a shaft between an outer space and an inner space in which different fluids are stored.

The mechanical seal mainly includes a stationary seal ring-side unit U and a rotating seal ring 20. The rotating seal ring 20 has an annular shape and is provided to be rotatable together with a rotating shaft 1 as a shaft.

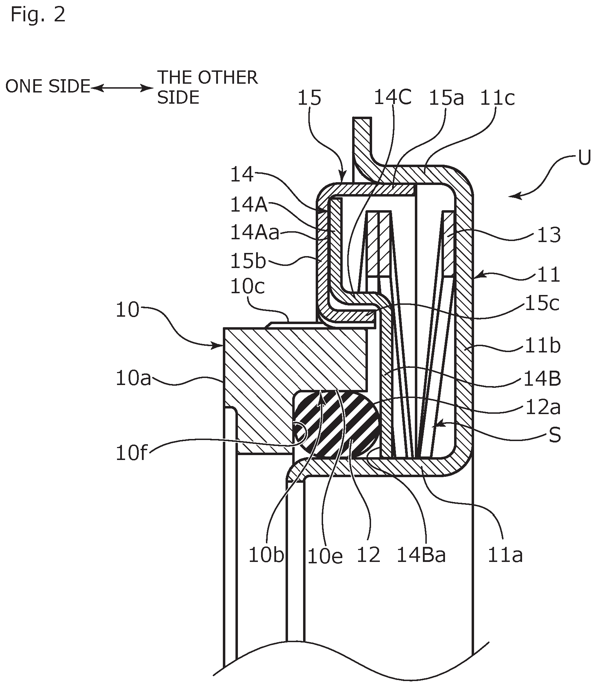

As illustrated in FIGS. 1 and 2, the stationary seal ring-side unit U mainly includes a stationary seal ring 10, a sleeve 11, an O-ring 12 as an elastic member, a spring 13 as a biasing member, a spring-receiving member 14 as a biasing-member-receiving member, and an adapter 15 as a holding member.

The stationary seal ring 10 has an annular shape and includes a sliding surface 10a that is slidable against and rotatable relative to a sliding surface 20a of the rotating seal ring 20. Further, an annular groove 10b is formed on the radially inner side of the other end of the stationary seal ring 10 in the axial direction. The annular groove 10b is open to the other side thereof in the axial direction and to the radially inner side thereof.

The sleeve 11 is an annular member which includes a support piece 11a as a support portion, a spring-receiving piece 11b as a receiving portion, and an opposing piece 11c and of which a portion between the rotating shaft 1 and a housing 4 has a substantially inverted C-shaped cross-section. The sleeve 11 is fixed to the housing 4 of a mounting target device.

The sleeve 11 is formed by the bending of a thin metal sheet. Since the sleeve 11 has a substantially inverted C-shaped cross-section, the structural strength of the sleeve 11 is ensured. The sleeve 11 is not limited to being made of metal, and may be freely modified to be made of a resin or the like.

The support piece 11a extends in the axial direction on the radially inner side of the stationary seal ring 10. The support piece 11a is a portion that supports the stationary seal ring 10.

The spring-receiving piece 11b extends radially outward from the other end of the support piece 11a in the axial direction. The spring-receiving piece 11b is a portion that is in contact with the other end of the spring 13 and receives a biasing force of the spring 13.

The opposing piece 11c extends from a radially outer end of the spring-receiving piece 11b toward one side in the axial direction substantially in parallel to the support piece 11a, and faces the support piece 11a in a radial direction. The opposing piece 11c is fixed to an inner peripheral surface of the housing 4. The opposing piece 11c is not limited to being substantially parallel to the support piece 11a, and may extend to be inclined with respect to the support piece 11a.

The O-ring 12 is made of rubber, a synthetic resin, or the like. The O-ring 12 is disposed in the annular groove 10b of the stationary seal ring 10, and seals a gap between the stationary seal ring 10 and the support piece 11a while allowing the movement of the stationary seal ring 10 in the axial direction. The elastic member is not limited to the O-ring 12, and may be an X-ring or the like.

The spring 13 is a coiled wave spring that is larger than the stationary seal ring 10 in diameter. Further, the spring 13 and the stationary seal ring 10 are disposed to be offset from each other in the radial direction. The spring 13 is not limited to the coiled wave spring and may be a coil spring or the like.

The spring-receiving member 14 is an annular sheet having a crank-shaped cross-section. The spring-receiving member 14 is disposed closer to the other side in the axial direction than the stationary seal ring 10 and the O-ring 12.

In detail, the spring-receiving member 14 includes a first portion 14A provided on a radially outer side, a second portion 14B provided on a radially inner side, and a third portion 14C that connects a radially inner end of the first portion 14A to a radially outer end of the second portion 14B in the axial direction. The first portion 14A, the second portion 14B, and the third portion 14C have the same thickness and form a stepped shape. The second portion 14B is disposed closer to the other side than the first portion 14A in the axial direction.

The first portion 14A overlaps with the spring 13 in the axial direction. The second portion 14B overlaps with the stationary seal ring 10 and the O-ring 12 in the axial direction. The third portion 14C is disposed closer to the radially outer side than the stationary seal ring 10.

The adapter 15 is an annular member that includes a first piece 15a, a second piece 15b, and a third piece 15c as sheet-like bodies and has a substantially C-shaped cross-section. The adapter 15 is formed by the bending of a thin metal sheet. Since the adapter 15 has a substantially C-shaped cross-section, the structural strength of the adapter 15 is ensured. The adapter 15 is not limited to being made of metal, and may be made of a resin or the like.

The first piece 15a extends in the axial direction. The second piece 15b extends radially inward from one end of the first piece 15a in the axial direction. The third piece 15c extends from a radially inner end of the second piece 15b toward the other side in the axial direction, and faces the first piece 15a in the radial direction.

The adapter 15 is press-fitted into the inner side of the opposing piece 11c of the sleeve 11. The third piece 15c of the adapter 15 is disposed in a radial gap between the stationary seal ring 10 and the third portion 14C of the spring-receiving member 14. The third piece 15c is disposed on the radially outer side of the stationary seal ring 10 to be spaced apart from the stationary seal ring 10.

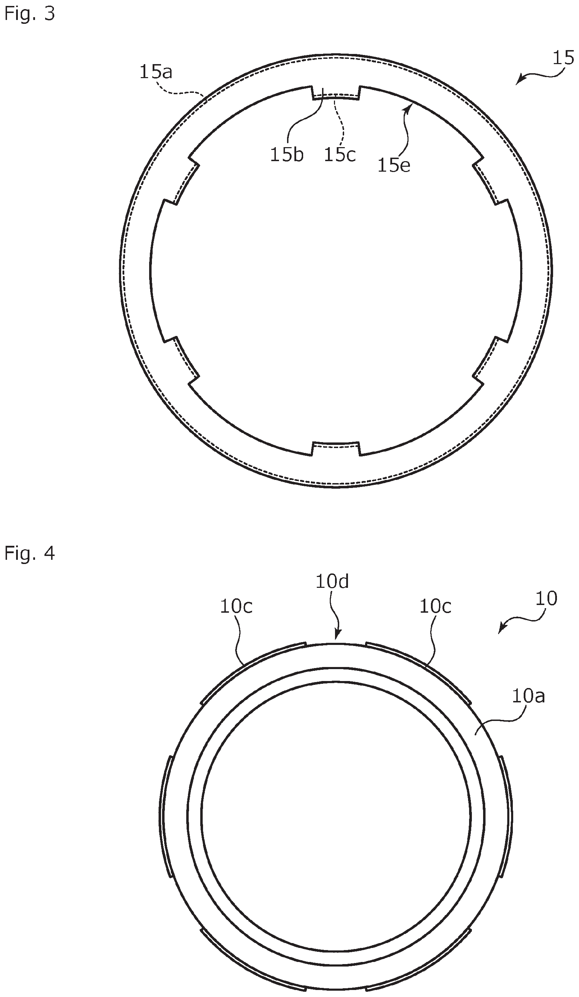

As illustrated in FIG. 3, recessed portions 15e, which are open to the radially inner side and penetrate in the axial direction, are formed on the radially inner side of the adapter 15 at six positions to be spaced apart from each other in a circumferential direction.

First, with regard to the adapter 15, the radially outer side and the radially inner side of an annular sheet, which forms the adapter 15 and is not yet subjected to bending, are bent toward the other side in the axial direction to form the annular first piece 15a, and the second piece 15b, and the third piece 15c. Next, six recessed portions 15e are cut out from the radially inner side of the second piece 15b and the third piece 15c in the circumferential direction to form the adapter 15.

That is, a portion of the second piece 15b of the adapter 15 at which the third piece 15c is provided is also referred to as a protruding portion that protrudes toward the radially inner side. The adapter may have a configuration in which a plurality of protruding portions are provided on an inner peripheral surface of a sheet having not an annular shape but a C shape as viewed in the axial direction.

As illustrated in FIG. 4, a plurality of (six in this embodiment) protruding portions 10c protruding toward the radially outer side are provided on an outer peripheral surface of the stationary seal ring 10 in the circumferential direction. The length of the protruding portion 10c in the axial direction is longer than the length of the third piece 15c of the adapter 15 in the axial direction (see FIGS. 1 and 2). A recessed portion 10d, which is open to the radially outer side and penetrates in the axial direction, is formed between each pair of adjacent protruding portions 10c.

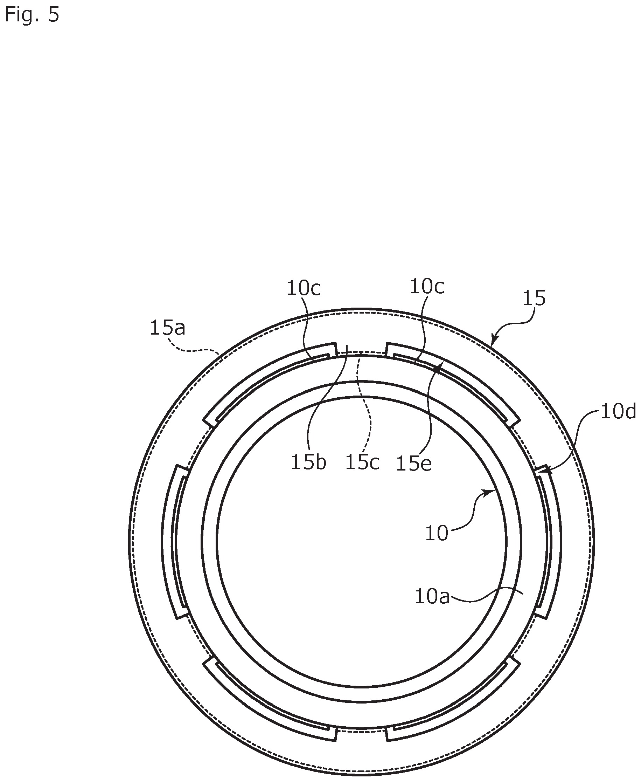

As illustrated in FIG. 5, the protruding portions 10c of the stationary seal ring 10 are fitted to the recessed portions 15e of the adapter 15 in a state in which the stationary seal ring 10 and the adapter 15 are assembled to each other.

Accordingly, the relative rotation of the stationary seal ring 10 and the adapter 15 in the circumferential direction is regulated and the relative movement thereof in the axial direction is allowed.

Returning to FIG. 2, in a state in which the stationary seal ring-side unit U is assembled, one end face 14Aa of the first portion 14A of the spring-receiving member 14 in the axial direction is in contact with the second piece 15b of the adapter 15 and the spring 13 is held in a contracted state. Further, a space S is formed between the second portion 14B of the spring-receiving member 14 and the spring-receiving piece 11b of the sleeve 11 in the axial direction.

According to this, since the adapter 15 prevents the spring 13 from excessively extending in the axial direction, the fall off of the stationary seal ring 10 from the support piece 11a of the sleeve 11, which may occur due to the movement of the spring 13 in the axial direction acting on the stationary seal ring 10 during the transport of the stationary seal ring-side unit U or during the mounting of the stationary seal ring-side unit U on the housing 4, is prevented.

Further, the stationary seal ring 10 is adapted to be movable in the axial direction through a radial gap between the support piece 11a of the sleeve 11 and the adapter 15. According to this, since the stationary seal ring 10 is pushed toward the other side in the axial direction due to the contact between the stationary seal ring 10 and the rotating seal ring 20 during the assembly of the mechanical seal, the spring 13 is compressed via the spring-receiving member 14 (see FIG. 1). That is, the stationary seal ring 10 is adapted to be capable of obtaining a biasing force applied from the spring 13 to one side in the axial direction via the spring-receiving member 14 during the assembly of the mechanical seal.

Furthermore, the adapter 15 is installed to be press-fitted into the inner side of the opposing piece 11c of the sleeve 11. According to this, the adapter 15 can be simply installed without the need of work such as welding.

Moreover, since the first piece 15a is deformed toward the radially inner side when the adapter 15 is press-fitted into the inner side of the opposing piece 11c, the adapter 15 is easily press-fitted into the inner side of the opposing piece 11c.

Further, since the adapter 15 has an annular shape, the strength of the opposing piece 11c of the sleeve 11 can be equally increased in the circumferential direction. For example, the strength of the sleeve 11 can be ensured and a deterioration in the out-of-roundness of the sleeve 11 can be avoided as compared to an aspect in which a part of the opposing piece 11c of the sleeve 11 is cut out and the opposing piece 11c is bent inward to form the holding member.

Furthermore, since the first piece 15a extends in the axial direction, a wide range in which the opposing piece 11c is reinforced can be ensured in the axial direction. In addition, since the adapter 15 is guided by the first piece 15a during the press-fitting of the adapter 15, the adapter 15 can be accurately press-fitted into the inner side of the opposing piece 11c.

Further, it is possible to easily adjust the biasing force of the spring 13 by adjusting the press-fitting amount of the adapter 15.

Furthermore, since one end face 14Ba of the second portion 14B of the spring-receiving member 14 in the axial direction is disposed closer to the other side in the axial direction than the end face 14Aa of the first portion 14A, the stationary seal ring 10 and the O-ring 12 can be disposed closer to the other side in the axial direction than the end face 14Aa of the first portion 14A.

That is, since the stationary seal ring 10 and the O-ring 12 can be disposed to partially overlap with the spring 13 in the radial direction, the dimension of the stationary seal ring-side unit U in the axial direction can be reduced.

Further, in a state in which the stationary seal ring-side unit U is assembled, a part of the O-ring 12 bulges out from the annular groove 10b of the stationary seal ring 10 toward the other side in the axial direction and the end face 14Ba of the second portion 14B of the spring-receiving member 14 is in contact with this bulging portion 12a. Accordingly, the spring-receiving member 14 is not in direct contact with the stationary seal ring 10 and the inclination of the spring-receiving member 14 is absorbed by the O-ring 12. As a result, the posture of the stationary seal ring 10 can be stabilized.

Furthermore, an inner peripheral surface 10e of the annular groove 10b is in contact with the radially outer side of the O-ring 12, the support piece 11a of the sleeve 11 is in contact with the radially inner side of the O-ring 12, an end face 10f of the annular groove 10b is in contact with one side of the O-ring in the axial direction, and the second portion 14B of the spring-receiving member 14 is in contact with the other side of the O-ring 12 in the axial direction. Accordingly, static friction is generated on each contact surface of the O-ring 12, so that the twist or slip of the O-ring 12 can be prevented.

The numbers of the protruding portions 10c and the recessed portions 10d of the stationary seal ring 10 and the numbers of the protruding portions and the recessed portions 15e of the adapter 15 are not limited to this embodiment, and can be freely changed.

### {Second embodiment}

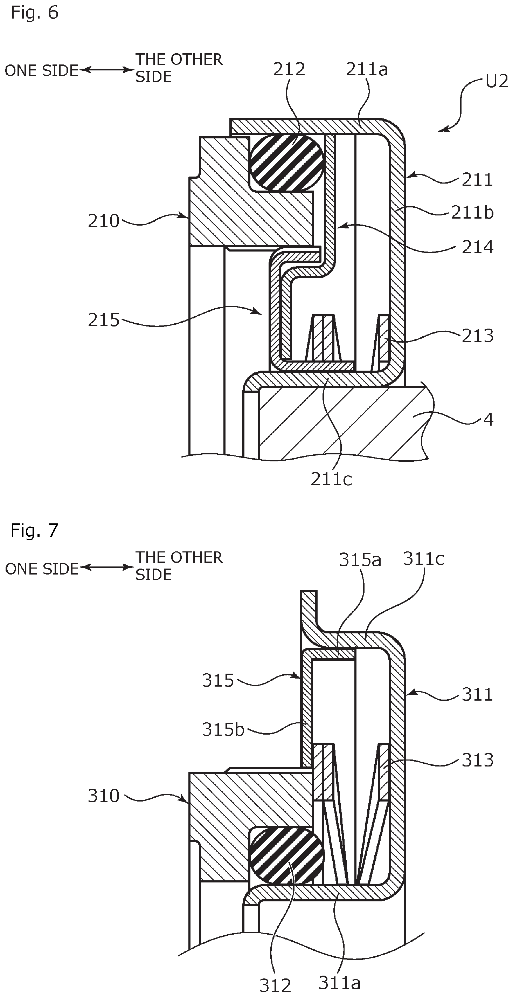

Next, a sliding component according to a second embodiment of the present invention will be described with reference to FIG. 6. The repeated description of components of the second embodiment, which are the same as those of the first embodiment, will be omitted.

As illustrated in FIG. 6, a sleeve 211 of the second embodiment includes a support piece 211a provided on the radially outer side of a spring-receiving piece 211b and an opposing piece 211c provided on the radially inner side of the spring-receiving piece 211b. An inner peripheral surface of the opposing piece 211c is fixed to an outer peripheral surface of the housing 4.

The cross-sectional shape of a stationary seal ring 210 is a shape in which the cross-sectional shape of the stationary seal ring 10 of the first embodiment is substantially inverted in the radial direction. The stationary seal ring 210 and an O-ring 212 are held on the radially inner side of the support piece 211a of the sleeve 211.

The cross-sectional shape of an adapter 215 is a shape in which the cross-sectional shape of the adapter 15 of the first embodiment is substantially inverted in the radial direction. The adapter 215 is smaller than the stationary seal ring 210 in diameter, and is press-fitted into the radially outer side of the opposing piece 211c of the sleeve 211. That is, the adapter 215 is disposed on the radially inner side of the stationary seal ring 210.

Further, the cross-sectional shape of a spring-receiving member 214 is a shape in which the cross-sectional shape of the spring-receiving member 14 of the first embodiment is substantially inverted in the radial direction.

Furthermore, a spring 213 is disposed on the radially inner side of the stationary seal ring 210.

Thus, even though various members constituting a stationary seal ring-side unit U2 according to the second embodiment are disposed as described above, substantially the same actions and effects as the stationary seal ring-side unit U according to the first embodiment are obtained.

### {Third embodiment}

Next, a sliding component according to a third embodiment of the present invention will be described with reference to FIG. 7. The repeated description of components of the third embodiment, which are the same as those of the first embodiment, will be omitted.

As illustrated in FIG. 7, a stationary seal ring 310, a sleeve 311, an O-ring 312, and a spring 313 of the third embodiment are substantially the same as the stationary seal ring 10, the sleeve 11, the O-ring 12, and the spring 13 of the first embodiment. The spring-receiving member 14 of the first embodiment is not provided.

An adapter 315 includes a first piece 315a that extends substantially in parallel to an opposing piece 311c of the sleeve 311 and a second piece 315b that extends radially inward from one end of the first piece 315a in the axial direction, and has an inverted L-shaped cross-section.

One end of the spring 313 in the axial direction is in contact with the second piece 315b of the adapter 315 and the stationary seal ring 310 that are spaced apart from each other in the radial direction. The spring 313 is held in a contracted state by the adapter 315.

Further, since the stationary seal ring 310 and the O-ring 312 can be inserted from a gap between the second piece 315b of the adapter 315 and a support piece 311a of the sleeve 311 toward the other side in the axial direction, a biasing force from the spring 313 can be obtained as the stationary seal ring 310 and the O-ring 312 are moved toward the other side in the axial direction.

Even though the spring-receiving member 14 is not provided as described above, the fall off of the stationary seal ring 310 from the support piece 311a of the sleeve 311, which may occur due to the movement of the spring 313 in the axial direction acting on the stationary seal ring 310 during the transport of the stationary seal ring-side unit or during the mounting of the stationary seal ring-side unit on the housing 4, can be prevented and a biasing force from the spring 313 can be obtained during use.

Although the embodiments of the present invention have been described above with reference to the drawings, the specific configuration is not limited to these embodiments and any modifications or additions without departing from the scope of the present invention are also included in the present invention.

For example, an aspect in which the adapter is installed to be press-fitted into the opposing piece of the sleeve has been exemplified in the first to third embodiments, but the present invention is not limited thereto and the adapter may be fixed to the sleeve by welding, an adhesive, or the like. Further, the adapter is not limited to being fixed to the opposing piece of the sleeve, and may be fixed to the spring-receiving piece of the sleeve. Furthermore, the adapter and the sleeve may be indirectly fixed to each other via another member interposed between the adapter and the sleeve.

Moreover, an aspect in which the adapter has a substantially C-shaped cross-section has been exemplified in the first and second embodiments and an aspect in which the adapter has an inverted L-shaped cross-section has been exemplified in the third embodiment, but the present invention is not limited thereto and the shape of the adapter can be freely changed. For example, the adapter may be an annular flat sheet. Further, the holding member is not limited to an annular member and a plurality of holding members may be provided in the circumferential direction.

Furthermore, an aspect in which the spring-receiving member is in contact with the bulging portion of the elastic member has been exemplified in the first and second embodiments, but the spring-receiving member may be in contact with the stationary seal ring.

Moreover, the spring has been exemplified as the biasing member in the first to third embodiments, but the biasing member may be, for example, an elastic member or the like made of rubber or the like.

Further, the O-ring has been exemplified as the elastic member in the first to third embodiments, but the elastic member may be, for example, a bellows or the like that seals a gap between the sleeve and the stationary seal ring while allowing the relative movement of the sleeve and the stationary seal ring.

Furthermore, the stationary seal ring-side unit has been exemplified and described as the sliding component in the first to third embodiments, but the present invention may be applied to a rotating seal ring-side unit.

Moreover, an aspect in which the shaft is rotated relative to the housing fixedly installed has been described in the first to third embodiments, but the housing may be adapted to be rotated relative to the shaft fixedly installed or the housing and the shaft may be adapted to be rotated relative to each other.

Further, the stationary seal ring-side unit of the mechanical seal used for a shaft seal has been exemplified as the sliding component in the first to third embodiments, but may be used for, for example, a bearing.

### {REFERENCE SIGNS LIST}

- 1: Rotating shaft (shaft)
- 4: Housing
- 10: Stationary seal ring (sliding ring)
- 10b: Annular groove
- 10c: Protruding portion
- 10d: Recessed portion
- 11: Sleeve
- 11a: Support piece (support portion)
- 11b: Spring-receiving piece (receiving portion)
- 11c: Opposing piece
- 12: O-ring (elastic member)
- 12a: Bulging portion
- 13: Spring
- 14: Spring-receiving member (biasing-member-receiving member)
- 14A: First portion
- 14Aa: End face
- 14B: Second portion
- 14Ba: End face
- 14C: Third portion
- 15: Adapter (holding member)
- 15a: First piece (sheet-like body)
- 15b: Second piece
- 15c: Third piece
- 15e: Recessed portion
- U: Stationary seal ring-side unit

## Claims

1. A sliding component that is disposed at a relative rotation position between a housing and a shaft inserted into the housing, comprising:
a sliding ring that is provided on a rotating side or a fixed side;
a sleeve that includes a support portion extending in an axial direction and a receiving portion extending in a radial direction;
an elastic member that is disposed between the support portion and the sliding ring;
a biasing member that is disposed between the sliding ring and the receiving portion and biases the sliding ring to one of a first side and a second side which are opposed to each other in the axial direction; and
a holding member that is fixed to the sleeve and holds the biasing member in a state in which the biasing member is contracted in the axial direction.

2. The sliding component according to claim 1,
wherein the sleeve includes an opposing portion that faces the support portion in the radial direction, and
the holding member is press-fitted into the opposing portion.

3. The sliding component according to claim 2,
wherein the holding member has an annular shape.

4. The sliding component according to claim 3,
wherein the holding member is formed of a sheet-like body which is formed in a C-shape in a cross section and which is configured to be deformable in the radial direction.

5. The sliding component according to any one of claims 1 to 4,
wherein one of the holding member and the sliding ring is provided with a protruding portion that extends in the axial direction, and remaining one of the holding member and the sliding ring is provided with a recessed portion that is fitted to the protruding portion to be movable relative to the protruding portion in the axial direction.

6. The sliding component according to claim 1,
wherein the biasing member is disposed to be offset from the sliding ring in the radial direction, and
the sliding component further comprises an annular biasing-member-receiving member having a first portion overlapping with the holding member in the axial direction and a second portion overlapping with the sliding ring in the axial direction, the first portion and the second portion forming a stepped shape in the axial direction.

7. The sliding component according to claim 6,
wherein the elastic member includes a bulging portion that bulges out toward remaining one of the first side and the second side in the axial direction as compared to the sliding ring, and
the biasing-member-receiving member is brought into contact with the bulging portion.

8. The sliding component according to claim 7,
wherein the sliding ring includes an annular groove that is open to the remaining one of the first side and the second side in the axial direction and open toward the support portion in the radial direction, and the elastic member is disposed in the annular groove.
